# EUROPÄISCHE PATENTSCHRIFT

(11) **EP 3 615 597 B1**
(45) Veröffentlichungstag und Bekanntmachung des Hinweises auf die Patenterteilung: **02.12.2026**
(21) Anmeldenummer: 18718688.7
(22) Anmeldetag: 06.04.2018
(51) Int. Cl.: C08J 5/18, B32B 27/32

(54) **POLYOLEFINFOLIE UND DEREN VERWENDUNG**
POLYOLEFIN FILM AND USE THEREOF
FILM DE POLYOLÉFINE ET SON UTILISATION

(30) Priorität: 27.04.2017 DE 102017004111
(43) Veröffentlichungstag der Anmeldung: 04.03.2020
(73) Patentinhaber: TOPAS Advanced Polymers GmbH, 65479 Raunheim (DE)
(72) Erfinder: GOERLITZ, Wolfram, 65193 Wiesbaden (DE)
(74) Vertreter: Ackermann, Joachim
(86) Internationale Anmeldenummer: PCT/EP2018/000164
(87) Internationale Veröffentlichungsnummer: WO 2018/197034

(56) Entgegenhaltungen:
- WO-A1-2012/022409
- JP-A- 2017 052 932

## Beschreibung

Die vorliegende Erfindung betrifft Polyolefinfolien, die sich als elektrische Isolatoren oder als Dielektrika einsetzen lassen. Diese Polyolefinfolien zeichnen sich durch einen geringen dielektrischen Verlustfaktor, geringen Schrumpf und einen niedrigen Reibungskoeffizienten aus.

Thermoplastische Harze umfassende Isolatoren werden beispielsweise zur Erdisolierung, Schichtisolierung und Leiterisolierung von Motoren, zur Isolierung von Transformatoren und als Dielektrika von Kondensatoren eingesetzt. Daneben ist auch der Einsatz von Papieren, Textilien, imprägnierten Produkten davon und Glimmer üblich. Als thermoplastische Harze, die in diesen Isolatoren verwendet werden, sind Polypropylene (PP) am weitesten verbreitet. Biaxial verstreckte PP-Folien (BOPP Folien) zum Einsatz als Dielektrikum in Kondensatoren sind in mehreren Patentdokumenten beschrieben, beispielsweise in WO 2015/091829 A1, US 5,724,222 A und EP 2 481 767 A2.

BOPP-Folien haben ausgezeichnete elektrische und mechanische Eigenschaften. Allerdings lässt deren Beständigkeit bei erhöhten Temperaturen zu wünschen übrig. Dieses äußert sich in einem erhöhten Schrumpf, der üblicherweise bei Temperaturen oberhalb von 100°C auftritt, was eine Verformung der aus diesen Folien hergestellten Kondensatoren zur Folge hat. Auch die auf den Folienoberflächen aufgebrachte Metallisierung leidet darunter, was zu einer Funktionsunfähigkeit der daraus hergestellten Kondensatoren führen kann.

Cycloolefinpolymere sind bekannte amorphe Polymere, die beispielsweise unter Handelsnamen TOPAS^{®}, APEL^{®}, ZEONOR^{®} oder ZEONEX^{®} erhältlich sind. Cycloolefinpolymere zeichnen sich durch eine einstellbare Wärmeformbeständigkeit HDT/B, durch hohe optische Transparenz, hohe Steifigkeit und außerordentliche Reinheit aus, so dass die Materialien für Verpackungen von Lebensmitteln und Medizinprodukten und auch als primäre Packmittel im direktem Kontakt mit einem Wirkstoff eingesetzt werden können.

Cycloolefinpolymere werden unter anderem aufgrund ihrer ausgezeichneten Transparenz seit Jahren zur Herstellung von Folien, optischen Bauteilen sowie Behältern aller Art eingesetzt.

Kondensatorfolien auf der Basis von Cycloolefinpolymeren sind ebenfalls lange bekannt, beispielsweise aus EP 0 992 531 A1, WO 00/63013 A2 oder CA 2 115 196 C. Aufgrund ihrer hohen Glasübergangstemperaturen lassen sich diese Folien in der Regel nur auf speziellen Maschinen verarbeiten. Außerdem lässt die Verstreckbarkeit dieser Folien zu wünschen übrig. Eine hohe Verstreckbarkeit ist insbesondere bei der Herstellung dünner Folien wünschenswert.

Auch Folien aus Mischungen von Cycloolefinpolymeren und PP sind bekannt. JP H05-262,989 A offenbart biaxial verstreckte Folien, die aus einem Gemisch aus 40 - 98 Gew. % an kristallinem Polyolefin und aus 2 - 60 Gew. % an Copolymer abgeleitet von Ethylen und einem cyclischen Olefin bestehen. Als Glasübergangstemperaturen für das eingesetzte Cycloolefinpolymer werden 50 bis 190°C, vorzugsweise 80 bis 170°C angegeben. Als Kristallitschmelzpunkt für das eingesetzte PP werden 120 bis 180°C angegeben. Es findet sich kein Hinweis darauf, dass Cycloolefinpolymer und PP hinsichtlich Glasübergangstemperatur und Kristallitschmelztemperatur einer speziellen Auswahl unterliegen müssen. Diese Folien werden als Verpackungsmaterial eingesetzt.

DE 10 2010 034 643 A1 offenbart Zusammensetzungen enthaltend mindestens ein Cycloolefinpolymer mit einer Glasübergangstemperatur von mindestens 140°C, mindestens ein von alpha-Olefin(en) abgeleitetes Polymer und mindestens ein ausgewähltes Copolymer als eine die Verträglichkeit dieser Komponenten verbessernde Komponente. Dieses Dokument beschreibt auch den möglichen Einsatz von Folien aus dieser Zusammensetzung als Kondensatorfolien, ohne jedoch weitere Einzelheiten dazu zu nennen.

Aus der DE 195 36 043 A1 sind Polyolefinfolien bekannt, die Polyolefin und Cycloolefinpolymer umfassen, wobei das Cycloolefinpolymer amorph ist, ein mittleres Molekulargewicht M_{w} im Bereich von 200 bis 100000 besitzt, das höchstens 50 % des M_{w} des Polyolefins beträgt und das Cycloolefinpolymer ein Homopolymer ist oder höchstens 20 Gew. % an Comonomeranteil aufweist. Aufgrund des geringen Comonomeranteils weisen die Cycloolefinpolymeren hohe Glasübergangstemperaturen auf. Andererseits offenbart dieses Dokoment auch den Einsatz von Cycloolefinpolymeren mit sehr geringen Glasübergangstemperaturen von bis zu 0 °C. In der Beschreibung finden sich allgemeine Angaben zur Herstellung von Folien aus diesen Zusammensetzungen. Auch die biaxiale Verstreckung wird offenbart. Allerdings gibt dieses Dokument keinen Hinweis auf die Herstellung von biaxial verstreckten Folien mit geringem Schrumpf. Die Zusammensetzungen sind zur Herstellung von Verpackungsfolien geeignet.

Das Dokument WO 2012/022409 A1 offenbart ebenfalls Polyolefinfolien zum Einsatz in Kondensatoren enthaltend ein Polyolefin und ein Cycloolefinpolymer.

Die elektrischen Eigenschaften von Cycloolefinpolymer Folien sind zwar für Kondensatoranwendungen interessant, aber deren Vermarktung ist bislang daran gescheitert, da diese mit herkömmlicher Folientechnologie nur schwer herstellbar sind. Außerdem ist PP dem Cycloolefinpolymer im Preis deutlich überlegen.

Aktuell wächst das Interesse an Kondensatoren mit höherer Temperaturbeständigkeit. Für eine Reihe von Anwendungsgebieten, wie in der Invertertechnologie, in Siliziumcarbid Halbleitern und in der Elektromobilität, sind Kondensatoren gefragt, die für höhere Gebrauchstemperaturen geeignet sind.

Mit der vorliegenden Erfindung werden Folien mit höherer Temperaturbeständigkeit bereitgestellt, die auf Standardfolienreckanlagen oder auf wenig modifizierten Standardfolienreckanlagen hergestellt werden können. Überraschenderweise wurde gefunden, dass durch den Einsatz von vergleichsweise geringen Mengen an Cycloolefinpolymeren mit ausgewählten Glasübergangstemperaturen in Kombination mit (teil)kristalleinen Polyolefinen mit Kristallitschmelzpunkten, die in der Nähe der Glasübergangstemperaturen der Cycloolefinpolymeren liegen, sich Folien mit verbesserten Dauergebrauchstemperaturen herstellen lassen. Dieses zeigt sich am Schrumpfverhalten der Folie. Bereits geringe Anteile an Cycloolefinpolymer reichen aus, um den Einsatz des Schrumpfes zu deutlich höheren Temperaturen zu verschieben.

Außerdem zeigt die erfindungsgemäße Folie eine ausgewählte Oberflächenrauheit. Diese ist für die Weiterverarbeitung der Folien, die für den Einsatz als Kondensatorfolien vorgesehen sind, von Bedeutung. Eine zu hohe Rauheit bedeutet ein Risiko für die elektrischen Eigenschaften (Spitzenentladungen). Es wurde überraschenderweise gefunden, dass bei der erfindungsgemäß eingesetzten Kunststoffmischung die notwendigen Rauheiten allein durch die Einstellung der Blendmorphologie und durch die Prozessführung erreicht werden können, so dass die Zugabe von für Additiven entfallen oder auf ein Minimum begrenzt werden kann. Solche Additive verleihen den Folien häufig ungünstige elektrische Eigenschaften.

Ferner hat sich überraschenderweise gezeigt, dass durch geringe Zusätze an Cycloolefinpolymeren zu (teil)kristallinen Polyolefinen die ausgezeichnete Verstreckbarkeit von Polyolefinfolien erhalten bleibt und dabei gleichzeitig die Wärmebeständigkeit der hergestellten Folien deutlich verbessert wird. Kondensatorfolien aus (teil)kristallinen Polyolefinen, wie BOPP-Folien, zeigen aufgrund der niedrigen Glasübergangstemperaturen der Polyolefine bei Temperaturen oberhalb von 100°C Ausfallerscheinungen.

Eine Aufgabe der vorliegenden Erfindung ist die Bereitstellung von Polyolefinfolien, die eine ausgezeichnete Wärmebeständigkeit aufweisen und die auch bei Temperaturen oberhalb von 100°C, besonders oberhalb von 120°C, nur eine geringe Schrumpfneigung zeigen.

Eine weitere Aufgabe der vorliegenden Erfindung ist die Bereitstellung von Polyolefinfolien, die ausgezeichnete Isolationseigenschaften und einen geringen dielektrischen Verlustfaktor besitzen, und die problemlos zu Kondensatoren verarbeitet werden können, ohne dass die Folie beim Aufwickeln abgetrennt oder verwickelt wird.

Die vorliegende Erfindung betrifft eine biaxial verstreckte Kondensator-Polyolefinfolie enthaltend
a) 10 bis 45 Gew.-% eines Cycloolefinpolymeren mit einer Glasübergangstemperatur zwischen 120 und 170°C, und
b) 90 - 55 Gew.-% eines teilkristallinen alpha-Olefinpolymeren mit einer Kristalllitschmelztemperatur zwischen 150 und 170°C,
wobei die Glasübergangstemperatur von Komponente a) kleiner gleich die Kristalllitschmelztemperatur von Komponente b) ist, und die Polyolefinfolie einen Schrumpf bei 130°C und nach 5 Minuten, gemessen nach DIN ISO 11501, von kleiner gleich 2 % aufweist.

Die erfindungsgemäße biaxial verstreckte Polyolefinfolie weist vorzugsweise eine Oberflächenrauheit Rₐ, gemessen nach DIN EN ISO 4287, von 0,02 bis 0,5 µm auf, vorzugsweise von 0,04 bis 0,2 µm. Des Weiteren weist die erfindungsgemäße Folie vorzugsweise einen R_{z}, gemessen nach DIN EN ISO 4287, von 0,1 bis 2 µm auf, insbesondere von 0,3 bis 0,8 µm, und vorzugsweise einen Rₘₐₓ, gemessen nach DIN EN ISO 4287, von 0,1 bis 2 µm auf, insbesondere von 0,3 bis 1 µm.

Bei den erfindungsgemäß eingesetzten Cycloolefinpolymeren, handelt es sich um an sich bekannte Polymere. Dabei kann es sich um Polymere abgeleitet von einem Monomer oder von zwei oder mehr unterschiedlichen Monomeren handeln.

Die Cycloolefinpolymeren werden durch ringöffnende oder insbesondere durch ringerhaltende Polymerisation hergestellt, vorzugsweise durch ringerhaltende Copolymerisation von cyclischen Olefinen, wie Norbornen, mit nicht-cyclischen Olefinen, wie alpha-Olefinen, insbesondere Ethylen.

Durch die Wahl der Katalysatoren kann in an sich bekannter Weise gesteuert werden, ob der olefinische Ring des cyclischen Monomeren bei der Polymerisation erhalten bleibt oder geöffnet wird. Beispiele für Verfahren der ringöffnenden Polymerisation von Cycloolefinen findet man in EP 0 827 975 A2. Beispiele für Katalysatoren, die hauptsächlich bei ringerhaltender Polymerisation eingesetzt werden, sind Metallocen-Katalysatoren. Eine Übersicht über mögliche chemische Strukturen der von Cycloolefinen abgeleiteten Polymeren findet sich beispielsweise in Pure Appl. Chem., Vol. 77, No. 5, pp. 801-814 (2005).

Unter dem Begriff "Cycloolefinpolymer" sind im Rahmen dieser Beschreibung auch solche Polymere zu verstehen, welche nach der Polymerisation einer Hydrierung unterworfen worden sind, um noch vorhandene Doppelbindungen zu reduzieren.

Bei den erfindungsgemäß eingesetzten Cycloolefinpolymeren handelt es sich um Thermoplaste, die sich durch eine außerordentlich hohe Transparenz auszeichnen.

Die Glasübergangstemperatur (nachstehend auch "T_{g}" genannt) der Cycloolefinpolymeren kann vom Fachmann in an sich bekannter Weise durch Auswahl von Art und Menge der Monomeren, z.B. von Art und Menge von cyclischen und nicht-cyclischen Monomeren eingestellt werden. So ist beispielsweise von Norbornen-Ethylen-Copolymeren bekannt, dass die Glasübergangstemperatur umso höher ist, je höher der Anteil an Norbornen-Komponente im Copolymer ist. Entsprechendes gilt für Kombinationen anderer cyclischer Monomerer mit nicht-cyclischen Monomeren.

Unter Glasübergangstemperatur ist im Rahmen der vorliegenden Beschreibung die nach ISO 11357 mit der Differential-Scanning-Calorimetrie (DSC) Methode bestimmte Temperatur zu verstehen, wobei die Aufheizgeschwindigkeit 10 K/Minute beträgt.

In den erfindungsgemäßen Polymerfolien werden Cycloolefinpolymere mit Glasübergangstemperaturen zwischen 120 und 170°C eingesetzt, vorzugsweise zwischen 130 und 170°C und ganz besonders bevorzugt zwischen 140 und 160 °C.

In einer weiteren bevorzugten Ausführungsform der erfindungsgemäßen Polymerfolie werden Cycloolefincopolymere eingesetzt, die sich von der ringerhaltenden Copolymerisation von mindestens einem Cycloolefin der allgemeinen Formel (I) mit mindestens einem alpha-Olefin der Formel (II) ableiten 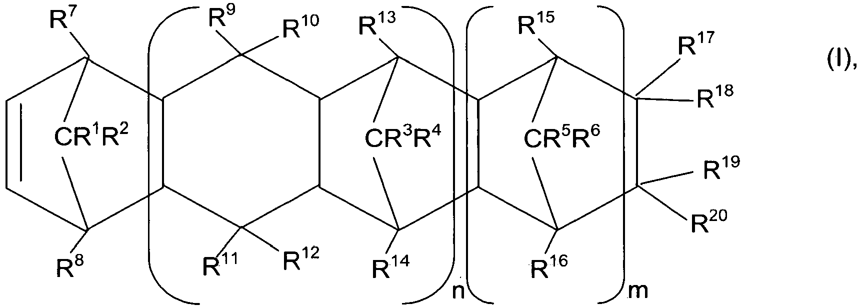 worin
n 0 oder 1 bedeutet,
m für 0 oder eine positive ganze Zahl ist, insbesondere 0 oder 1,
R¹, R², R³, R⁴, R⁵, R⁶ unabhängig voneinander Wasserstoff, Halogen, Alkylgruppen, Cycloalkylgruppen, Arylgruppen und Alkoxygruppen bedeuten, R⁷, R⁸, R⁹, R¹⁰, R¹¹, R¹², R¹³, R¹⁴, R¹⁵, R¹⁶ unabhängig voneinander Wasserstoff und Alkylgruppen bedeuten,
R¹⁷, R¹⁸, R¹⁹, R²⁰ unabhängig voneinander Wasserstoff, Halogen und Alkylgruppen bedeuten,
wobei R¹⁷ und R¹⁹ auch aneinander gebunden sein können, derart dass sie einen einfachen Ring oder ein Ringsystem mit mehreren Ringen bilden, wobei der Ring oder die Ringe gesättigt oder ungesättigt sein können, 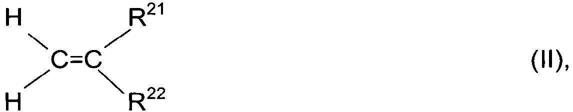
worin R²¹ und R²² unabhängig voneinander Wasserstoff und Alkylgruppen bedeuten.

In einer besonders bevorzugten Ausführungsform werden Cycloolefincopolymere eingesetzt, die sich von Verbindungen der Formeln I und II ableiten, worin n 0 ist, m 0 oder 1 bedeutet, R²¹ und R²² beide Wasserstoff bedeuten oder R²¹ Wasserstoff ist und R²² eine Alkylgruppe mit einem bis acht Kohlenstoffatomen ist, und R¹, R², R⁵ bis R⁸ und R¹⁵ bis R²⁰ vorzugsweise Wasserstoff bedeuten.

In einer ganz besonders bevorzugten Ausführungsform werden Cycloolefincopolymere eingesetzt, welche sich von Verbindungen der Formeln I und II ableiten, worin die Verbindung der Formel I Norbornen oder Tetracyclododecen ist und die Verbindung der Formel II Ethylen ist.

Ganz besonders bevorzugt werden Copolymere des vorstehend definierten Typs eingesetzt, wobei deren Copolymerisation in Gegenwart eines Metallocenkatalysators erfolgt ist.

Bevorzugte Typen von Cycloolefin-Copolymeren sind in der DE 102 42 730 A1 beschrieben. Ganz besonders bevorzugt lassen sich als Cycloolefincopolymere die Typen Topas^{®} 6013, Topas^{®} 6015 und Topas^{®} 5013 (Topas Advanced Polymers GmbH, Frankfurt am Main) einsetzen.

Die Herstellung der erfindungsgemäß bevorzugt eingesetzten Cycloolefincopolymeren erfolgt unter ringerhaltender Polymerisation, d.h. die bi- oder polycyclische Struktur der eingesetzten Monomereinheiten bleiben bei der Polymerisation erhalten. Beispiele für Katalysatoren sind Titanocen-, Zirkonocen- oder Hafnocen-Katalysatoren, die in der Regel kombiniert mit Aluminoxanen als Co-Katalysatoren eingesetzt werden. Diese Herstellungsweise ist bereits vielfach beschrieben, beispielsweise in dem weiter oben erwähnten Patentdokument.

Typische Beispiele für Cycloolefincopolymere sind Copolymere aus Norbornen oder Tretracyclododecen mit Ethylen. Derartige Polymere sind kommerziell erhältlich, beispielsweise unter den Handelsnamen APEL^{®}, ARTON^{®} oder TOPAS^{®}.

Weitere Beispiele sind Cycloolefinpolymere, die sich von ringöffnender Polymerisation von Cyclopentadien oder von Norbornen ableiten. Derartige Polymere sind ebenfalls kommerziell erhältlich, beispielsweise unter den Handelsnamen ZEONEX^{®} oder ZEONOR^{®}.

Bevorzugt werden Cycloolefincopolymere eingesetzt, die von den oben beschriebenen Monomeren der Formeln I und II abgeleitet sind, wobei diese Monomeren I : II im Molverhältnis von 95 : 5 bis 5 : 95 eingesetzt worden sind und die gegebenenfalls noch geringe Anteile von Struktureinheiten aufweisen, beispielsweise bis zu 10 Mol.%, bezogen auf die gesamte Monomermenge, welche von weiteren Monomeren, wie Propylen, Penten, Hexen, Cyclohexen und/oder Styrol abgeleitet sind.

Besonders bevorzugt werden Cycloolefincopolymere eingesetzt, die im Wesentlichen aus Norbornen und Ethylen bestehen, und die gegebenenfalls noch geringe Anteile, z.B. bis zu 5 Gew. %, bezogen auf die Gesamtmonomermenge, von Struktureinheiten aufweisen, welche von weiteren Monomeren, wie Propylen, Penten, Hexen, Cyclohexen und/oder Styrol abgeleitet sind.

Weitere besonders bevorzugt eingesetzte Cycloolefinpolymere weisen einen Melt-Flow-Index zwischen 0,3 - 4 g / 10 Minuten auf, gemessen bei einer Temperatur von 230°C unter einer Belastung von 2,16 kg.

Als zweite Komponente der erfindungsgemäß eingesetzten Polymermischung wird ein teilkristallines alpha-Olefinpolymer eingesetzt, das eine Kristallit-schmelztemperatur zwischen 150 und 170°C aufweist.

Dabei handelt es sich im Allgemeinen um teilkristalline Propylen-Homopolymere, die vorzugsweise eine Kristallit-Schmelztemperatur von 160 bis 165°C weisen oder um teilkristalline Propylen-C₄-C₈-alpha-Olefin-Copolymere, die vorzugsweise eine Kristallit-Schmelztemperatur von 150 bis 160°C aufweisen.

Unter Kristallitschmelztemperatur ist im Rahmen der vorliegenden Beschreibung die nach ISO 11357 mit der Differential-Scanning-Calorimetrie (DSC) Methode bestimmte Temperatur zu verstehen, wobei die Aufheizgeschwindigkeit 20 K/Minute beträgt.

Beispiele für C₄-C₈-alpha-Olefine sind Buten-1, Hexen-1, Octen-1.

Bei den ausgewählten teilkristallinen Polyolefinen zur Herstellung der erfindungsgemäßen Polymerfolie handelt es sich um lineare oder um verzweigte Typen. Die Abfolge unterschiedlicher Monomereinheiten in diesen Polyolefinen kann statistisch oder in der Form von Blöcken sein. Die einzelnen Monomereinheiten können sterisch unterschiedlich angeordnet sein, beispielsweise isotaktisch, syndiotaktisch oder ataktisch.

Bevorzugt eingesetzte teilkristalline Polyolefine sind Polyolefinhomopolymere abgeleitet von Propylen oder Polyolefincopolymere abgeleitet von Propylen mit einem Anteil von bis zu 10 Gew. % an höheren alpha-Olefinen mit 4-8-C-Atomen. Unter Copolymeren sind in diesem Zusammenhang auch Polymere zu verstehen, die sich von drei oder mehr unterschiedlichen Monomeren ableiten.

Polypropylen ist ein mit Hilfe stereospezifisch wirkender Katalysatoren hergestelltes isotaktisches, syndiotaktisches oder ataktisches Polypropylen.

Polypropylen kristallisiert beim Abkühlen aus der Schmelze. Dabei ordnen sich die langen Molekülketten in Teilbereichen gefaltet und bilden sehr kleine Kristallite, die zusammen mit amorphen Zonen zu Überstrukturen, den sogenannten Sphärolithen verbunden sein können. Die Kristallisation ist umso besser möglich, je kürzer die Ketten sind und je geringer der Verzweigungsgrad ist. Der kristalline Anteil weist eine höhere Dichte auf als der amorphe Anteil. Man erhält daher unterschiedliche Dichten, abhängig vom kristallinen Anteil. Der Kristallisationsgrad bewegt sich bei Polypropylenen typischerweise im Bereich zwischen 35 % und 80 %, vorzugsweise zwischen 60 und 80 %.

Die Dichte von Polypropylen ist sehr niedrig und liegt zwischen 0,895 g/cm³ und 0,92 g/cm³. Polypropylen hat üblicherweise eine Glasübergangstemperatur von 0 bis -10 °C. Der Kristallit-Schmelzbereich liegt üblicherweise bei 160 bis 165 °C. Diese Temperaturen können durch Copolymerisation modifiziert werden; dem Fachmann sind die Maßnahmen dafür bekannt.

Besonders bevorzugt eingesetzte teilkristalline alpha-Olefinpolymere weisen einen Melt-Flow-Index zwischen 2 - 4 g / 10 Minuten auf, gemessen bei einer Temperatur von 230°C unter einer Belastung von 2,16 kg.

Die Auswahl des Cycloolefinpolymeren und des teilkristallinen alpha-Olefinpolymeren erfolgt im Einzelfall so, dass die Glasübergangstemperatur des ersteren kleiner oder gleich der Kristallitschmelztemperatur des letzteren ist. Dieses ist erforderlich, um die Herstellbarkeit der Folie aus diesem Polymerblend auf konventionellen Anlagen zu gewährleisten

In der erfindungsgemäßen Polyolefinfolie ist das Cycloolefinpolymere vorzugsweise in einer Matrix des teilkristallinen alpha-Olefinpolymeren dispergiert und bildet vorzugsweise eine Phase aus, in der die dispergierten Bereiche miteinander verbunden sind (co-kontinuierliche Phase). Durch die Ausbildung einer solchen Phase kann der Schrumpf besonders gut unterdrückt werden.

Für die Ausbildung einer ausreichenden Oberflächenrauheit ist es vorteilhaft, wenn die Melt-Flow-Indizes der eingesetzten Polymeren gezielt ausgewählt werden.

Bevorzugt weist das Cycloolefinpolymer einen Melt-Flow-Index zwischen 0,3 und 4 g / 10 Minuten, gemessen bei einer Temperatur von 230°C unter einer Belastung von 2,16 kg auf.

Bevorzugt weist das teilkristalline alpha-Olefinpolymere einen Melt-Flow-Index zwischen 1 und 4 g / 10 Minuten, gemessen bei einer Temperatur von 230°C unter einer Belastung von 2,16 kg auf.

Bevorzugt beträgt das Verhältnis der Melt-Flow-Indizes von Cycloolefinpolymer zu teilkristallinem alpha-Olefinpolymer von 1: 2 bis 2:1.

Besonders bevorzugt weist die erfindungsgemäße Polyolefinfolie einen niedrigen Metallgehalt auf. Dieses ist für den Einsatz als Kondensatorfolie wünschenswert, da bereits Spuren von Metallen im Dielektrikum die elektrischen Eigenschaften des Kondensators nachteilig beeinflussen können.

Vorzugsweise beträgt der Gesamtgehalt an Eisen, Kobalt, Nickel, Titan, Molybdän, Vanadium, Chrom, Kupfer und Aluminium in der erfindungsgemäßen Folie weniger als 0,25 ppm.

Die Herstellung der in den erfindungsgemäßen Polymerfolien eingesetzten Polymerblends kann grundsätzlich durch Vermischen der einzelnen Komponenten in dafür geeigneten Vorrichtungen erfolgen. Das Vermischen kann vorteilhaft in Knetern, Walzwerken oder Extrudern durchgeführt werden.

Die Menge an Cycloolefinpolymer im Polymerblend beträgt 10 bis 45 Gew. %, bezogen auf die Gesamtmischung, vorzugsweise 15 bis 40 Gew. %, insbesondere 15 bis 35 Gew. %, und besonders bevorzugt 20 bis 35 Gew. %.

Die Menge an teilkristallinen alpha-Olefinpolymeren im Polymerblend beträgt üblicherweise 90 bis 55 Gew. %, bezogen auf die Gesamtmischung, vorzugsweise 85 bis 60 Gew. %, besonders bevorzugt 80 bis 65 Gew. %.

Neben den zwingend vorhandenen Cycloolefinpolymer und dem teilkristallinen alpha-Olefinpolymer kann der Polymerblend gegebenenfalls noch an sich übliche Zusatzstoffe enthalten. Der Gesamtanteil dieser Zusatzstoffe beträgt üblicherweise bis zu 5 Gew. %, bezogen auf die Gesamtmischung, vorzugsweise bis zu 2 Gew. %.

Zusatzstoffe, auch Hilfsstoffe oder Additive genannt, sind Stoffe, die im Polymerblend in geringen Mengen zugesetzt werden, um bestimmte Eigenschaften zu erreichen oder zu verbessern, beispielsweise um einen positiven Effekt auf Herstellung, Lagerung, Verarbeitung oder Produkteigenschaften während und nach der Gebrauchsphase zu erreichen.

Bei den Zusatzstoffen kann es sich um Verarbeitungshilfsmittel handeln, wie beispielsweise um Öle oder Wachse, oder um Zusätze, welche dem Polymerblend oder der erfindungsgemäßen Polyolefinfolie eine bestimmte Funktion verleihen, wie Weichmacher, UV-Stabilisatoren, Mattierungsmittel, Konservierungsmittel, Biozide, Antioxidationsmittel, Antistatika, Flammschutzmittel, Verstärkungsmittel, Füllstoffe, Pigmente oder Farbstoffe.

Die erfindungsgemäße Polymerfolie wird durch Wärmeformen des vorstehend beschriebenen Polymerblends erhalten. Es können unterschiedliche Wärmeformverfahren verwendet werden. So kann die Formmasse zum Beispiel durch Strangpressen aus einem Einschnecken- oder Doppelschneckenextruder unter Verwendung einer Foliendüse verformt werden, oder die Folie kann direkt mit einer gegebenen Dicke durch ein Aufblas- oder Kalandrier-Verfahren erzeugt werden, oder es kann ein zweistufiges Verfahren durchgeführt werden, bei dem die Formmasse erhitzt und aufgeschmolzen wird und dabei ein vorgeformtes Produkt daraus erhalten wird, und wobei das Produkt erhitzt und gedehnt und, falls erforderlich, durch Hitze fixiert wird.

Die Erfindung betrifft auch ein Verfahren zur Herstellung der oben beschriebenen Kondensator-Polymerfolie umfassend die Schritte:
i) Herstellen einer Folie enthaltend 10 bis 45 Gew.-% des oben beschriebenen Cycloolefinpolymeren der Komponente a) und 90 - 55 Gew.-% dess oben beschriebenen alpha-Olefinpolymeren der Komponente b), und
ii) biaxiales Verstrecken der Folie aus Schritt i) durch sequenzielles Verstrecken oder durch simultanes Verstrecken.

Im Fall eines zweistufigen Verfahrens umfasst das Verfahren vom Erhitzen und Schmelzen bis zur Hitzefixierung zuerst das gewöhnliche Strangpressen der Formmasse. Dabei wird ein vorgeformtes Produkt zum Dehnen (Folie, Bahn oder Schlauch) hergestellt. Beim Formen wird die erhitzte und geschmolzene Formmasse im Allgemeinen durch eine Strangpressmaschine auf eine gegebene Größe geformt. Alternativ kann die Formmasse in erweichtem Zustand ohne Erhitzen und Schmelzen geformt werden. Es können Einschneckenstrangpressmaschinen oder Doppelschneckenstrangpressmaschinen eingesetzt werden. Vorzugsweise wird dabei für den Extruder ein passender Filter bereitgestellt, durch den Stoffe von außen und Fremdstoffe entfernt werden können. Die Extrusionsbedingungen werden vom Fachmann in Abhängigkeit von verschiedenen Umständen passend ausgewählt. Die Temperatur in der Strangpressmaschine wird bevorzugt im Bereich von der untersten Glasübergangstemperatur der Formmasse bis etwa 50°C unterhalb der Zersetzungstemperatur der Formmasse ausgewählt.

Die verwendeten Düsen können beispielsweise Schlitzdüsen, T-Düsen oder Ringdüsen sein.

Das so erhaltene vorgeformte und verstreckbare Produkt wird vorzugsweise durch Kühlen verfestigt. Das Kühlmedium kann ein Gas, eine Flüssigkeit oder eine Kühlwalze (z.B. aus Metall) sein. Die Temperatur für das Verfestigen durch Kühlen liegt gewöhnlich im Bereich von 20 bis 100°C, vorzugsweise von 80 bis 100°C. Die Kühlgeschwindigkeit kann beliebig gewählt werden, beispielsweise im Bereich von 3 bis 200°C/sec.

Das vorgeformte und verstreckbare Produkt wird biaxial verstreckt, um die erfindungsgemäße Polyolefinfolie zu erhalten. Beim biaxialen Verstrecken kann das vorgeformte und verstreckbare Produkt gleichzeitig in Längsrichtung und Querrichtung gestreckt werden oder es kann nacheinander in beliebiger Reihenfolge verstreckt werden (d. h. zuerst in Längsrichtung und anschließend in Querrichtung). Darüber hinaus kann das Verstrecken in einem Einzelschritt oder in mehreren Schritten durchgeführt werden.

Das Verstrecken erfolgt in der Regel in Maschinenrichtung ("MD") d.h. in Längsrichtung und quer zur Maschinenrichtung ("TD"). Das Streckverhältnis in Maschinenrichtung beträgt mindestens 1 : 2, vorzugsweise mindestens 1: 3 und insbesondere 1 : 3 bis 1 : 8. Das Streckverhältnis quer zur Maschinenrichtung beträgt mindestens 1 : 3, vorzugsweise mindestens 1: 5 und ganz besonderes bevorzugt 1 : 5,5 bis 1 : 10.

Das Streckverhältnis im Flächenverhältnis ist vorzugsweise mindestens 8-fach, bevorzugt 10-fach bis 100-fach und besonders bevorzugt 15 bis 70-fach. Das Verstrecken in MD und TD kann auch in mehreren Stufen erfolgen.

Es können verschiedene Streckverfahren verwendet werden. Beispiele dafür sind das Verwenden eines Spannrahmens oder das Verstrecken zwischen Walzen. Das Verstrecken kann nach der Herstellung der verstreckbaren Folie in einem oder mehreren separaten Schritten erfolgen oder schließt sich direkt und unmittelbar nach der Herstellung der verstreckbaren Folie an. Die Verstrecktemperatur kann im Allgemeinen zwischen 10°C unterhalb der Glasübergangstemperatur des eingesetzten Cycloolefinpolymeren und dem Kristallitschmelzpunkt des eingesetzten alpha-Olefinpolymeren eingestellt werden.

Die biaxial verstreckte Polymerfolie wird bevorzugt im Anschluss an das Verstrecken einer thermischen Fixierung unterzogen. Damit erreicht man eine besonders hohe Formbeständigkeit bei hohen Temperaturen. Die thermische Fixierung kann durch übliche Verfahren durchgeführt werden und wird zum Beispiel durch Behandeln der verstreckten Folie bei einer Temperatur zwischen der Glasübergangstemperatur des eingesetzten Cycloolefinpolymeren und der Kristallitschmelztemperatur des eingesetzten alpha-Olefinpolymeren für etwa 0,5 - 20 Sekunden in einem Zustand der Entspannung oder der eingeschränkten Kontraktion durchgeführt. Diese thermische Fixierung kann auch mehrmals unter Veränderung der Bedingungen durchgeführt werden.

Bevorzugt werden die erfindungsgemäßen Folien hergestellt, indem man die Polymermischung unter Einsatz eines Doppelschneckenextruders mit Entgasungsvorrichtung und unter Verwendung einer Breitschlitzdüse zu Folien formt. Die Temperaturen in der Extrusionsvorrichtung bewegen sich dabei im für die Herstellung von PP-Folien üblichen Bereich. So beträgt beispielsweise die Temperatur der Schmelze im Extruder etwa 260°C und im Bereich der Düse etwa 240°C. Anschließend wird die Folie biaxial verstreckt, entweder simultan oder sequentiell. Dabei werden typischerweise Mindeststreckverhältnisse (Streckfaktor längs x quer) von 15, insbesondere von 20, eingehalten, um aus der unverstreckten Folie eine möglichst dünne Endfolie zu erzeugen.

Erfindungsgemäß können auch coextrudierte Mehrschichtfolien hergestellt werden.

Beispiele dafür sind Mehrschichtfolien, die mindestens eine Kernschicht enthaltend
a) 10 bis 45 Gew.-% eines Cycloolefinpolymeren mit einer Glasübergangstemperatur zwischen 120 und 170°C, und
b) 90 - 55 % Gew.-% eines teilkristallinen alpha-Olefinpolymeren mit einer Kristalllitschmelztemperatur zwischen 150 und 170°C,
wobei die Glasübergangstemperatur von Komponente a) kleiner gleich die Kristalllitschmelztemperatur von Komponente b) ist, aufweisen und die ein oder zwei Deckschichten aus ein oder mehreren teilkristallinen alpha-Olefinpolymeren aufweisen, wobei die Mehrschichtfolien einen Schrumpf bei 130°C nach 5 Minuten, gemessen nach ISO 11501, von kleiner gleich 2 % aufweisen.

Weitere Beispiele dafür sind Mehrschichtfolien, die zwei oder mehrere Schichten enthaltend jeweils
a) 10 bis 45 Gew.-% eines Cycloolefinpolymeren mit einer Glasübergangstemperatur zwischen 120 und 170°C, und
b) 90 - 55 % Gew.-% eines teilkristallinen alpha-Olefinpolymeren mit einer Kristalllitschmelztemperatur zwischen 150 und 170°C,
wobei die Glasübergangstemperatur von Komponente a) kleiner gleich die Kristalllitschmelztemperatur von Komponente b) ist, aufweisen, wobei die Mehrschichtfolien einen Schrumpf bei 130°C nach 5 Minuten, gemessen nach ISO 11501, von kleiner gleich 2 % aufweisen.

Koextrudierte Mehrschichtfolien mit mindestens einer PP-Deckschicht und mindestens einer COC-PP-Blend-Kernschicht haben den Vorteil, dass sich deren Oberflächeneigenschaften sich mit bekannten, bei PP-Kondensatorfolien üblichen Techniken einstellen lassen, z.B. durch gezielte Steuerung der Kristallisation und gezielter Ausbildung von Sphäruliten, und dass sich durch die Anwesenheit der COC-PP-Blend-Kernschicht(en) mechanische und elektrischen Eigenschaften dieser Mehrschichtfolien bei höheren Temperaturen verbessern lassen.

Lebensdauertests an Folienkondensatoren hergestellt einerseits aus metallisierten erfindungsgemäßen Folien und andererseits aus metallisierten Folien aus Polypropylen haben gezeigt, dass erstere eine deutlich erhöhte Temperaturfestigkeit aufweisen.

Überraschenderweise genügt bereits der Zusatz geringer Anteile an Cycloolefinpolymeren zu teilkristallinen Polyolefinen, um den Folienschrumpf deutlich zu reduzieren. Im Vergleich zu reinen Polypropylenfolien behält der Schrumpf einer erfindungsgemäßen Polyolefinfolie seine niedrigen Werte auch bei deutlich höheren Temperaturen bei.

Im Gegensatz zu Folien aus reinem Cycloolefinpolymer kann die Herstellung der erfindungsgemäßen Polyolefinfolien auf herkömmlichen Anlagen unter Einsatz konventioneller Folienreckanlagen erfolgen.

Der Zusatz von geringen Mengen an Cycloolefinpolymer zu teilkristallinen Polyolefinen führt zu einer deutlichen Verbesserung der Wärmeformstabilität, wobei die von den Polypropylenfolien bekannten guten elektrischen Eigenschaften, wie Durchbruchspannung, oder deren gute Verarbeitbarkeit erhalten bleiben.

Die hier beschriebenen Polyolefinfolien können als Kondensatorfolien eingesetzt werden. In dieser Anwendung sind eine hohe Dimensionsstabilität und geringer Schrumpf bei erhöhten Temperaturen gefragt .

Die erfindungsgemäßen Folien können in einem Kondensator verbaut werden. Die Erfindung betrifft auch die Verwendung der oben beschriebenen Polyolefinfolie als Dielektrikum zur Herstellung von Kondensatoren.

Für die Verarbeitung insbesondere als Kondensatorfolie muss die erfindungsgemäße Polyolefinfolie eine bestimmte Oberflächenrauheit aufweisen. Diese Oberflächenrauheit Rₐ, gemessen nach DIN EN ISO 4287, beträgt vorzugsweise 0,05 bis 0,5 µm. Des Weiteren weist die erfindungsgemäße Folie vorzugsweise einen R_{z}, gemessen nach DIN EN ISO 4287, von 0,1 bis 2 µm auf, insbesondere von 0,3 bis 0,8 µm, und vorzugsweise einen Rₘₐₓ, gemessen nach DIN EN ISO 4287, von 0,1 bis 2 µm auf, insbesondere von 0,3 bis 1 µm.

Bei der Kondensatorherstellung wird die Polymerfolie von einer sich abwickelnden Rolle typischerweise auf eine Kühlwalze gewickelt und danach auf eine andere aufrollende Rolle aufgewickelt. Diese Arbeitsschritte können mehrfach durchgeführt werden. Für diese Operationen muss die Folie eine ausreichende Schlüpfrigkeit (einen geringen Reibungskoeffizienten zwischen den Folien) und Glätte (Oberflächenrauheit) aufweisen, da das Wickeln der Folie bei hoher Geschwindigkeit abläuft.

Bei Polypropylenfolien wird die geeignete Oberflächenrauheit durch die Steuerung der Kristallisation erreicht. Dabei bilden die Sphärolithe sogenannte "Lasso- oder Krater-Strukturen" aus. Überraschend lassen sich die erforderlichen Oberflächenrauheiten bei den erfindungsgemäßen Polymerfolien durch Auswahl geeigneter Polymerkomponenten Blendmorphologie und geeigneter Verarbeitungsbedingungen, wie Verarbeitungstemperaturen und Streckverhältnissen, einstellen.

Bei den erfindungsgemäßen Polymerfolien sind überraschenderweise zum Erzielen der gewünschten Oberflächenrauheit keine Zuschläge erforderlich.

Die erfindungsgemäßen Polyolefinfolien können ein- oder mehrschichtig sein. Mehrschichtige Folien weisen mindestens eine Schicht auf, welche die oben beschriebene Polymermischung enthalten.

Bevorzugt sind Polymerfolien einschichtig oder 2-, 3-, 4- oder 5-schichtig, wobei mehrschichtige Polymerfolien wenigstens eine der oben beschriebenen Polyolefinfolien enthalten.

Die erfindungsgemäßen Polyolefinfolien weisen vorzugsweise elektrische Durchschlagsfestigkeiten wie von Polypropylenfolien bekannt auf, vorzugsweise eine elektrisch Durchschlagsfestigkeit von >500 V/µm, nach DIN EN 60243-2 gemessen unter Gleichspannung bei 23°C.

Die erfindungsgemäßen Polyolefinfolien weisen darüber hinaus vorzugsweise einen dielektrischen Verlustfaktor von kleiner gleich 0,002 auf, gemessen bei einer Frequenz im Bereich von 1 kHz und von 1 GHz bei einer Temperatur von 25°C.

Die Dicken der erfindungsgemäßen Polyolefinfolien liegen im Wesentlichen zwischen 0,5 und 15 µm, vorzugsweise zwischen 1 und 10 µm. Die Foliendicke wird durch DIN 53370 bestimmt.

Die erfindungsgemäßen Polyolefinfolien weisen auch bei hohen Temperaturen einen im Vergleich mit PP-Folien äußerst geringen Schrumpf auf. Der Schrumpf bei 130°C beträgt typischerweise weniger als 2%. Bei PP-Folien werden diese Werte bereits bei 100 bis 110°C erreicht und die entsprechenden Werte bei 130°C liegen deutlich darüber.

Bevorzugte erfindungsgemäße Polyolefinfolien zeigen in Maschinenrichtung einen Schrumpf bei 130°C nach 5 Minuten, gemessen nach ISO 11501, von kleiner gleich 2 %, insbesondere von 0,1 bis 1,5 %, und quer zur Maschinenrichtung einen Schrumpf bei 130°C nach 5 Minuten, gemessen nach ISO 11501, von kleiner gleich 0,5 %, insbesondere von 0,01 bis 0,2 %.

In einer weiteren bevorzugten Ausführungsform ist die erfindungsgemäße Polyolefinfolie auf einer oder beiden Oberflächen metallisiert.

Die hier beschriebenen Polyolefinfolien können in einem Kondensator verbaut werden. Die Erfindung betrifft auch einen Kondensator enthaltend eine der oben beschriebenen Polyolefinfolien.

Eine Kondensatorfolie kann durch Aufbringen einer Metallschicht auf die Polymerfolie erhalten werden, zum Beispiel durch Aufdampfen, durch Laminieren oder durch chemische Verfahren. In Abhängigkeit von der Art des Kondensators kann die Metallschicht auf beide Seiten oder nur auf eine Seite aufgebracht werden. Darüber hinaus kann die Metallschicht auf die gesamte Oberfläche oder auf nur einen Teil der Oberfläche aufgebracht werden. Im Allgemeinen wird die Elektrodenschicht auf die gesamte Oberfläche einer Seite der Polymerfolie aufgebracht.

Es können beliebige Elektrodenschichten eingesetzt werden. Dabei wird ein elektrisch leitendes Material verwendet, z.B. Aluminium, Zink, Gold, Platin oder Kupfer. Dieses kann als Metallfolie und/oder als auf die Oberfläche der Kondensatorfolie aufgebrachter Metallfilm eingesetzt werden. Üblicherweise werden aufgedampfte Metallfilme bevorzugt, da die Elektrodenschicht dünner gemacht werden kann, und als Ergebnis volumenbezogene Kapazität größer ist. Die erfindungsgemäße Polymerfolie zeigt eine sehr gute Adhäsion zum Metallfilm und weist außerdem eine geringe Variation der Dicke auf. Aufgedampfte Metallfilme können mittels bekannter Verfahren, wie Vakuumbedampfung, Sputtern oder Ionenplattierung erzeugt werden.

Die Dicke der Metallfolien oder der aufgebrachten Metallfilme kann beliebig gewählt werden, beträgt jedoch bei aufgebrachten Metallfilmen bevorzugt 100-2000 Ä, stärker bevorzugt 200-1000 Ä. Wenn eine Metallfolie als Elektrodenschicht verwendet wird, beträgt deren Dicke üblicherweise 0,1 - 100 µm, bevorzugt 1-50 µm, stärker bevorzugt 3 - 15 µm.

Bei den erfindungsgemäßen Kondensatoren kann es sich um alle gängigen Kondensatortypen handeln. Beispiele dafür sind Folienkondensatoren. Dabei handelt es sich in der Regel um gewickelte Kondensatoren, bei welchen entweder nur die metallisierte Folie (das metallisierte Dielektrikum) oder eine unmetallisierte Folie (unmetallisiertes Dielektrikum) zusamenen mit einen dünnen Metallfolie gewickelt wird. Man unterscheidet in der Regel zwischen Schichtkondensatoren, Rundwickel-, Flachwickel- und Ring-Kondensatoren. Die Standard-Herstellungsverfahren der Kondensatoren sind dem Fachmann bekannt.

Die nachfolgenden Beispiele beschreiben die Erfindung. Eine Einschränkung ist dadurch nicht beabsichtigt.

### Allgemeine Beschreibung der Herstellung von biaxial verstreckten Polyolefinfolien und der Testverfahren

Die zur Herstellung der erfindungsgemäßen biaxial verstreckten Polyolefinfolie verwendete Anlage umfasste (i) eine Gießeinheit mit Breitschlitzdüse und Kühlwalze zum Erzeugen einer nicht-orientierten Folie, (ii) eine erste Sektion zum Verstrecken des gegossenen Films in Maschinenrichtung (MD) und (iii) eine zweite Sektion ausgestattet mit einer Heizvorrichtung zum Verstrecken des Films in Querrichtung (TD), wodurch die biaxial verstreckte Folie erhalten wird.

Die Längsreckeinheit der Anlage bewirkt in der Regel eine Längsverstreckung um einen Streckfaktor > 3.

Das Verstrecken des längsverstreckten Films in Querrichtung (TD) und dessen Transport in Längsrichtung (MD) durch den beheizten Querstreckofen (auch TD-Ofen genannt) wurde durch zwei gleichlaufende Ketten bewerkstelligt, die auf beiden Seiten des TD-Ofens verlaufen. Beide Ketten sind mit mehreren äquidistant angeordneten Kluppen ausgestattet. Die Kluppen jedes Bandes öffnen sich vor dem Eintritt den TD-Ofen und schließen dann, um den längsverstreckten Film, der kontinuierlich dem TD-Ofen zugeführt wird, zu greifen. Der TD-Ofen besteht im Allgemeinen aus einer Vorheiz-, Verstreck-Relaxations- bzw. Temperzone. Jede Zone ist weiter in kürzere Sektionen aufgeteilt, in denen eine ausgewählte Temperatur eingestellt werden kann.

Das Querstrecken wurde durch eine Vergrößerung des transversalen Abstands in der Verstreckzone durchgeführt. In der Relaxationszone des TD-Ofens wird das Verstreckverhältnis durch eine kleine Abnahme des transversalen Abstands leicht verringert. Die querverstreckte Folie wurde anschließend auf ein entsprechendes Wickelmedium (z.B. eine Rolle aus Pappe oder Metall) gewickelt.

Bei dem beschriebenen Streckverfahren erfolgte die Verstreckung der Folie in Längs- und Querrichtung in separaten Anlagenteilen (sequentiell).

Eine Variante des Streckverfahrens für biaxial orientierte Folien ist der simultane Streckprozess. Hierbei entfällt die vorgeschaltete Längsstreckung über Walzen. Stattdessen erfolgt die Gesamtverstreckung der Folie in Längs- und Querrichtung in einer speziellen Ausführung des Ofens bei dem die umlaufenden Kluppen nicht mehr äquidistant fixiert sind, sondern ihr Abstand individuell gesteuert und vergrößert werden kann. Die zwischen den Kluppen fixierte Folie wird dadurch gleichzeitig simultan längs und quer verstreckt. Die gewünschten Streckverhältnisse lassen sich hierbei durch die Geometrie des Ofens (Quer) und entsprechende Steuerung der Kluppenabstände (Längs) einstellen. Wie beispielsweise in der US 5,416,959 beschrieben
Der Zugmodul der biaxial verstreckten Folien in Maschinen- und Querrichtung wurde gemäß ISO 527-3 bei 23°C gemessen. Dabei betrug die Geschwindigkeit des Kreuzkopfes 1 mm/min.

Der Thermoschrumpf der biaxial verstreckten Folien wurde in Analogie zu ISO 11501 ermittelt. Filmproben der Größe von 10x10 cm wurden aus den biaxial verstreckten Folien geschnitten, in einen Umluftofen gelegt und 5 Minuten bei 120°C, 130°C oder bei 140°C behandelt. Die relative Längenabnahme der so behandelten Filme wurde mit den Ausgangsfilmen verglichen und als % Schrumpf dargestellt.

Die Oberflächenrauheiten Rₐ ,R_{z}, Rₘₐₓ der biaxial verstreckten Folien wurden gemäß DIN EN ISO 4287 ermittelt.

### Beispiele 1-6 und Vergleichsbeispiele V1-V5

Polyolefinfolien wurden hergestellt, indem die oben beschriebene allgemeine Verfahrensweise angewendet wurde. Die Zusammensetzung der erzeugten biaxial verstreckten Folien ist In Tabelle 1 dargestellt. Einige Eigenschaften der erzeugten biaxial verstreckten Folien sind in Tabelle 2 dargestellt.

Es wurden verschiedene COC-Typen eingesetzt. Beispielsweise wurde Material von TOPAS Advanced Polymers GmbH, Frankfurt am Main verwendet (z.B. Topas^{®} 6013, Topas^{®} 6015 oder Topas^{®} 6017). Das PP kann von verschiedenen Herstellern verwendet werden. Wichtig hierbei ist, dass - falls die erzeugten Folien als Kondensatorfolien eingesetzt werden sollen - es sich bei dem PP um ein hochreines Material handelt (Kondensatorgrade), beispielsweise um die Type Borclean^{®} HC300 BF von Borealis AG. Diese PP-Type war teilkristallin und wies eine Kristalllitschmelztemperatur von 164°C auf.

Als COC1 wurde das Material TOPAS^{®} 6013 eingesetzt. Dieses wies eine Glasübergangstemperatur von 142°C auf.

Als COC2 wurde das Material TOPAS^{®} 6015 eingesetzt. Dieses wies eine Glasübergangstemperatur von 158°C auf.

Als COC3 wurde das Material TOPAS^{®} 6017 eingesetzt. Dieses wies eine Glasübergangstemperatur von 178°C auf.

Glasübergangstemperaturen und Kristallitschmelztemperaturen wurden mittels DSC gemäß ISO 11357-1,-2,-3 (Dynamische Differenz Thermoanalyse / Differential Scanning Calorimetry) bestimmt, Aufheizgeschwindigkeit 10 K/min für die Bestimmung der Glasübergangstemperaturen, Aufheizgeschwindigkeit 20 K/min für Bestimmung der Kristallitschmelztemperaturen.

**Tabelle 1: Zusammensetzung und Fahrdaten der biaxial verstreckten Folien**

| Beispiel | Filmzusammensetzung | | Verstreckverfahren | Längsverstreckung | | Querverstreckung | | Foliendicke (µm) |
|---|---|---|---|---|---|---|---|---|
| | COC / Gew. % | PP / Gew. % | | Verstreck -grad | Temperatur [°C] | Verstreck -grad | Temperatur [°C] | |
| V1 | COC1/100 | - | simultan | 3,0 | - | 4,0 | - | Fehlschlag |
| V2 | COC1/50 | PP/50 | simultan | 3,0 | - | 4,0 | - | Fehlschlag |
| 1 | COC1/45 | PP/55 | simultan | 3,0 | 160 | 4,0 | 160 | 8,3 |
| 2 | COC1/40 | PP/60 | simultan | 3,8 | 163 | 4,1 | 163 | 7,5 |
| 2a | COC1/40 | PP/60 | sequentiell | 2,2 | 147 | 5,0 | 168 | 11 |
| V3 | COC1/40 | PP/60 | sequentiell | 3,0 | - | 5,0 | - | Fehlschlag |
| 3 | COC1/30 | PP/70 | sequentiell | 3,0 | 147 | 6,0 | 168 | 9 |
| 4 | COC1/20 | PP/80 | sequentiell | 3,3 | 147 | 6,3 | 168 | 8 |
| 5 | COC2/20 | PP/80 | sequentiell | 3,2 | 148 | 6,5 | 172 | 9 |
| 6 | COC1/20 | PP/80 | simultan | 3,8 | 163 | 8 | 163 | 6 |
| V4 | COC3/20 | PP/80 | sequentiell | 3,2 | - | 6,3 | - | Fehlschlag |
| V5 | - | PP/100 | sequentiell | 4,6 | 137 | 9,0 | 164 | 8 |

| | | | | | | | | |
|---|---|---|---|---|---|---|---|---|
| Anmerkung: Fehlschlag bedeutet, dass eine kontinuierliche Verstreckung bei den gewählten (oder höheren) Verstreckgraden nicht möglich ist, es gibt kein geeignetes Prozessfenster (Temperaturfenster). | | | | | | | | |

Die Ergebnisse in Tabelle 1 belegen, dass Folien enthaltend mindestens 55 % PP und 45% COC mit üblichen sequentiellen oder simultanen Streckprozessen unter ähnlichen Bedingungen kontinuierlich verstreckt werden können wie Folien aus 100 % PP.

Die Ergebnisse in Tabelle 1 belegen ferner, dass bei COC-Gehalten von 40 Gew. % und höher die Verstreckbarkeit von der Art des Verstreckverfahrens abhängen kann und dass nur geringere Verstreckgrade realisiert werden können als mit Zusammensetzungen mit geringeren Anteilen an COC.

Die Beispiele 2, 2a und V3 zeigen, dass beim Einsatz von Zusammensetzungen , deren COC-Gehalt am oberen Ende der beanspruchten Zusammensetzungen liegt, die Art der Verstreckung und die dabei gewählten Verfahrensparameter bei der Herstellung der verstreckten Folien einen Einfluss haben können. Hier sind beim sequentiellen Verstrecken zwar noch Folien herstellbar; allerdings sind nur geringere Verstreckgrade möglich, so dass sehr dünne Folien bei diesen Verstreckbedingungen nicht mehr erhalten werden können.

Beispiele 4, 5 und V4 zeigen, dass bei Einsatz eines COC mit Glasübergangstemperatur außerhalb des beanspruchten Bereiches die Verstreckung nicht mehr gelingt.

Beispiele 4 und 6 zeigen, dass im beanspruchten Formulierungsbereich simultanes und sequentielles Verstrecken möglich ist. Im Simultanstreckprozess wurden höhere Verstreckgrade erzielt.

**Tabelle 2: Eigenschaften von biaxial verstreckten Folien**

| Beispiel | Zugmodul | | Oberflächenrauheit Rₐ | Oberfl.rauheit R_{z} / Rₘₐₓ | Thermoschrumpf bei 120°C / 5Min. | | Thermoschrumpf bei 130°C / 5 Minuten | | Thermoschrumpf bei 140°C / 5 Minuten | |
|---|---|---|---|---|---|---|---|---|---|---|
| | MD [N/mm²] | TD [N/mm²] | [µm] | [µm] | MD [%] | TD [%] | MD [%] | TD [%] | MD [%] | TD [%] |
| V1 | nicht biaxial verstreckbar | | | | | | | | | |
| V2 | nicht biaxial verstreckbar | | | | | | | | | |
| 1 | 2795 | 3112 | 0,13-0,19 | 0,7-1,1 | 0,75 | 0,18 | 1,30 | 0,29 | 2,10 | 0,39 |
| | | | | 0,9-1,2 | | | | | | |
| 2 | 2814 | 3129 | 0,12-0,18 | 0,8-1,1 | 0,77 | 0,20 | 1,35 | 0,28 | 2,19 | 0,44 |
| | | | | 1,0-1,3 | | | | | | |
| 2a | 2843 | 4026 | 0,06-0,11 | 0,5-1,0 | 0,9 | 0,12 | 1,43 | 0,22 | 2,41 | 0,30 |
| | | | | 0,8-1,1 | | | | | | |

| V3 | nicht biaxial verstreckbar | | | | | | | | | |
|---|---|---|---|---|---|---|---|---|---|---|
| 3 | 2758 | 4006 | 0,05-0,12 | 0,3-0,8 | 1,00 | -0,04 | 1,51 | -0,10 | 2,88 | 0,13 |
| | | | | 0,4-1,0 | | | | | | |
| 4 | 2592 | 3914 | 0,05-0,09 | 0,3-0,6; | 1,00 | 0,07 | 1,95 | 0,00 | 3,4 | 0,57 |
| | | | | 0,4-0,7 | | | | | | |
| 5 | 3135 | 4190 | 0,10-0,13 | 0,7-0,9 | 1,00 | 0,00 | 1,77 | 0,23 | 2,83 | 0,30 |
| | | | | 0,9-1,1 | | | | | | |
| 6 | 2871 | 4132 | 0,09-0,16 | 0,6-1,2 | 0,83 | 0,15 | 1,41 | 0,18 | 2,06 | 0,27 |
| | | | | 0,8-1,2 | | | | | | |

| V4 | nicht biaxial verstreckbar | | | | | | | | | |
|---|---|---|---|---|---|---|---|---|---|---|
| V5 | 2557 | 5321 | 0,06-0,1 | 0,6-0,10 | 3,28 | 0,38 | 4,5 | 2,2 | 5,2 | 3,1 |
| | | | | 0,6-1,0 | | | | | | |

Die Ergebnisse in Tabelle 2 belegen, dass Polymerblends enthaltend PP und mindestens 10 % COC zu Folien mit niedrigen Thermoschrumpfwerten verarbeitet werden können. Außerdem wird gezeigt, dass die Werte für den Thermoschrumpf der COC enthaltenden Folien bei 140°C etwa den Werten für den Thermoschrumpf der PP-Folien bei 120°C entsprechen.

### Beispiele 7-8

Polyolefinfolien wurden hergestellt, indem die oben beschriebene allgemeine Verfahrensweise angewendet wurde. Die Beispiele 7 und 8 demonstrieren, wie die Rauheiten der Folien variiert werden können. Die Zusammensetzung und die Rauheiten der erzeugten biaxial verstreckten Folien ist in Tabelle 3 dargestellt.

Es wurde Material von TOPAS Advanced Polymers GmbH, Frankfurt am Main verwendet (Topas^{®} 6013). Das PP kann von verschiedenen Herstellern verwendet werden. Wichtig hierbei ist, dass - falls die erzeugten Folien als Kondensatorfolien eingesetzt werden sollen - es sich bei dem PP um ein hochreines Material handelt (Kondensatorgrade), beispielsweise die Type Borclean^{®} HC300 BF von Borealis AG.

**Tabelle 3: Zusammensetzung und Fahrdaten von biaxial verstreckten Folien**

| Beispiel | Filmzusammensetzung | | Verstreckverfahren | Längsverstreckung | | Querverstreckung | | Oberflächen -rauheit Rₐ (µm) |
|---|---|---|---|---|---|---|---|---|
| | COC / % | PP / % | | Verstreckgrad | Temperatur [°C] | Verstreck -grad | Temperatur [°C] | |
| 7 | COC1/40 | PP/60 | simultan | 3,8 | 163 | 4,1 | 163 | 0,06-0,11 |
| 8 | COC1/40 | PP/60 | simultan | 3,0 | 163 | 4,1 | 163 | 0,04-0,07 |

Die Ergebnisse in Tabelle 3 belegen, dass die Rauheit der erzeugten Folien sich über Prozessparameter einstellen lässt, wie z.B. durch die Längsreckbedingungen

## Patentansprüche

1. Biaxial verstreckte Kondensator-Polyolefinfolie enthaltend
a) 10 bis 45 Gew.-% eines Cycloolefinpolymeren mit einer Glasübergangstemperatur**,** bestimmt mittels der Messmethode der Beschreibung, zwischen 120 und 170°C, und
b) 90 - 55 % Gew.-% eines teilkristallinen alpha-Olefinpolymeren mit einer Kristalllitschmelztemperatur ,bestimmt mittels der Messmethode der Beschreibung, zwischen 150 und 170°C,
wobei die Glasübergangstemperatur von Komponente a) kleiner gleich die Kristalllitschmelztemperatur von Komponente b) ist, und die Polyolefinfolie einen Schrumpf bei 130°C nach 5 Minuten, gemessen nach ISO 11501, von kleiner gleich 2 % aufweist.

2. Polyolefinfolie nach Anspruch 1, **dadurch gekennzeichnet, dass** diese eine Oberflächenrauheit Rₐ, gemessen nach DIN EN ISO 4287, von 0,02 bis 0,5 µm, vorzugsweise von 0,04 bis 0,2 µm aufweist.

3. Polyolefinfolie nach Anspruch 2, **dadurch gekennzeichnet, dass** diese eine Oberflächenrauheit R_{z}, gemessen nach DIN EN ISO 4287, von 0,1 bis 2 µm, insbesondere von 0,3 bis 0,8 µm, aufweist.

4. Polyolefinfolie nach Anspruch 1, **dadurch gekennzeichnet, dass** das Cycloolefinpolymer erhalten wird durch ringerhaltende Copolymerisation wenigstens eines Cycloolefins mit wenigstens einem alpha-Olefin, worin das Cycloolefin Norbornen oder Tetracyclododecen ist und das alpha-Olefin Ethylen und/oder Propylen bedeutet, und worin das Cycloolefin und das alpha-Olefin vorzugsweise in Gegenwart eines MetallocenKatalysators copolymerisiert worden sind.

5. Polyolefinfolie nach mindestens einem der Ansprüche 1 bis 4, **dadurch gekennzeichnet, dass** das teilkristalline alpha-Olefinpolymere ein teilkristallines alpha-Olefinhomo- oder -copolymer ist, vorzugsweise ein Propylen-Homopolymer oder ein Copolymer, das erhalten wird durch Copolymerisation von Propylen mit einer Menge von kleiner gleich 5 Gew.-% eines alpha-Olefins mit zwei oder mit vier bis acht Kohlenstoffatomen.

6. Polyolefinfolie nach mindestens einem der Ansprüche 1 bis 5, **dadurch gekennzeichnet, dass** die Glasübergangstemperatur des Cycloolefincopolymeren zwischen 130 und 170°C liegt, vorzugsweise zwischen 140 und 160 °C.

7. Polyolefinfolie nach mindestens einem der Ansprüche 1 bis 6, **dadurch gekennzeichnet, dass** das Cycloolefincopolymer einen Melt-Flow-Index zwischen 0,3 - 4 g / 10 Minuten aufweist, gemessen bei einer Temperatur von 230°C unter einer Belastung von 2,16 kg. und/oder dass das teilkristalline alpha-Olefinpolymere einen Melt-Flow-Index zwischen 1 - 4 g / 10 Minuten aufweist, gemessen bei einer Temperatur von 230°C unter einer Belastung von 2,16 kg.

8. Polyolefinfolie nach mindestens einem der Ansprüche 1 bis 7, **dadurch gekennzeichnet, dass** das Cycloolefinpolymer in einer Matrix des teilkristallinen alpha-Olefinpolymeren dispergiert ist.

9. Polyolefinfolie nach Anspruch 8, **dadurch gekennzeichnet, dass** das Cycloolefinpolymer in der Matrix des teilkristallinen alpha-Olefinpolymeren eine co-kontinuierliche Phase bildet.

10. Polyolefinfolie nach mindestens einem der Ansprüche 1 bis 9, **dadurch gekennzeichnet, dass** deren Gesamtgehalt an Eisen, Kobalt, Nickel, Titan, Molybdän, Vanadium, Chrom, Kupfer und Aluminium weniger als 0,25 ppm beträgt.

11. Polyolefinfolie nach mindestens einem der Ansprüche 1 bis 10, **dadurch gekennzeichnet, dass** die Folie eine Dicke zwischen 0,5 und 15 µm, gemessen nach DIN 53370, vorzugsweise zwischen 1 und 10 µm besitzt.

12. Polyolefinfolie nach mindestens einem der Ansprüche 1 bis 11, **dadurch gekennzeichnet, dass** diese eine elektrische Durchschlagsfestigkeit von 500 bis 750 V/µm nach DIN EN 60243-2, gemessen unter Gleichspannung, aufweist, und/oder dass diese einen dielektrischen Verlustfaktor von kleiner gleich 0,002, gemessen bei einer Frequenz im Bereich von 1 kHz und von 1 GHz bei einer Temperatur von 25°C aufweist.

13. Polyolefinfolie nach mindestens einem der Ansprüche 1 bis 12, **dadurch gekennzeichnet, dass** diese einen Schrumpf bei 130°C nach 5 Minuten in Maschinenlaufrichtung, gemessen nach DIN ISO 11501, von kleiner gleich 2 % und einen Schrumpf bei 130°C nach 5 Minuten quer zur Maschinenlaufrichtung, gemessen nach DIN ISO 11501, von kleiner gleich 0,5 % aufweist.

14. Polyolefinfolie nach mindestens einem der Ansprüche 1 bis 13, **dadurch gekennzeichnet, dass** diese eine Mehrschichtfolie ist, die mindestens eine Kernschicht enthaltend
a) 10 bis 45 Gew.-% eines Cycloolefinpolymeren mit einer Glasübergangstemperatur zwischen 120 und 170°C, und
b) 90 - 55 % Gew.-% eines teilkristallinen alpha-Olefinpolymeren mit einer Kristalllitschmelztemperatur zwischen 150 und 170°C,
wobei die Glasübergangstemperatur von Komponente a) kleiner gleich die Kristalllitschmelztemperatur von Komponente b) ist, aufweisen und die ein oder zwei Deckschichten aus ein oder mehreren teilkristallinen alpha-Olefinpolymeren aufweisen, wobei die Mehrschichtfolien einen Schrumpf bei 130°C nach 5 Minuten, gemessen nach DIN ISO 11501, von kleiner gleich 2 % aufweisen- oder dass diese eine Mehrschichtfolie ist, die mindestens eine Kernschicht aus zwei oder mehreren Schichten enthaltend jeweils
a) 10 bis 45 Gew.-% eines Cycloolefinpolymeren mit einer Glasübergangstemperatur zwischen 120 und 170°C, und
b) 90 - 55 % Gew.-% eines teilkristallinen alpha-Olefinpolymeren mit einer Kristalllitschmelztemperatur zwischen 150 und 170°C,
wobei die Glasübergangstemperatur von Komponente a) kleiner gleich die Kristalllitschmelztemperatur von Komponente b) ist, aufweisen, wobei die Mehrschichtfolien einen Schrumpf bei 130°C nach 5 Minuten, gemessen nach DIN ISO 11501, von kleiner gleich 2 % aufweisen.

15. Verfahren zur Herstellung der Kondensator-Polyolefinfolie nach einem der Ansprüche 1 bis 14 umfassend die Schritte:
i) Herstellen einer Folie enthaltend 10 bis 45 Gew.-% des Cycloolefinpolymeren der Komponente a) nach Anspruch 1 und 90 bis 55 Gew.-% des alpha-Olefinpolymeren der Komponente b) nach Anspruch 1, und
ii) biaxiales Verstrecken der Folie aus Schritt i) durch sequenzielles Verstrecken oder durch simultanes Verstrecken..

16. Kondensator enthaltend eine Kondensator-Polyolefinfolie nach einem der Ansprüche 1 bis 14.

17. Verwendung einer Kondensator-Polyolefinfolie nach einem der Ansprüche 1 bis 14 als Dielektrikum zur Herstellung von Kondensatoren.

## Claims

1. Biaxially stretched capacitor polyolefin film comprising
a) 10 to 45 wt% of a cycloolefin polymer having a glass transition temperature, determined using the measurement method described herein, of between 120 and 170°C, and
b) 90 to 55 wt% of a semi-crystalline alpha-olefin polymer having a crystallite melting temperature, determined using the measurement method described herein, of between 150 and 170°C,
wherein the glass transition temperature of component a) is less than or equal to the crystallite melting temperature of component b), and the polyolefin film exhibits a shrinkage at 130°C after 5 minutes, measured according to ISO 11501, of less than or equal to 2%.

2. Polyolefin film according to claim 1, wherein it has a surface roughness Rₐ, measured according to DIN EN ISO 4287, of 0.02 to 0.5 µm, preferably 0.04 to 0.2 µm.

3. Polyolefin film according to claim 2, wherein it has a surface roughness R_{z}, measured according to DIN EN ISO 4287, of 0.1 to 2 µm, in particular of 0.3 to 0.8 µm.

4. Polyolefin film according to claim 1, wherein the cycloolefin polymer is obtained by ring-preserving copolymerization of at least one cycloolefin with at least one alpha-olefin, wherein the cycloolefin is norbornene or tetracyclododecene and the alpha-olefin is ethylene and/or propylene, and wherein the cycloolefin and the alpha-olefin have preferably been copolymerized in the presence of a metallocene catalyst.

5. Polyolefin film according to at least one of claims 1 to 4, wherein the semi-crystalline alpha-olefin polymer is a semi-crystalline alpha-olefin homopolymer or copolymer, preferably a propylene homopolymer or a copolymer obtained by copolymerizing propylene with an amount of less than or equal to 5% by weight of an alpha-olefin having two or four to eight carbon atoms.

6. Polyolefin film according to at least one of claims 1 to 5, wherein the glass transition temperature of the cycloolefin copolymer is between 130 and 170°C, preferably between 140 and 160°C.

7. Polyolefin film according to at least one of claims 1 to 6, wherein the cycloolefin copolymer has a melt flow index between 0.3 and 4 g/10 minutes, measured at a temperature of 230°C under a load of 2.16 kg, and/or wherein the semi-crystalline alpha-olefin polymer has a melt flow index between 1 and 4 g/10 minutes, measured at a temperature of 230°C under a load of 2.16 kg.

8. Polyolefin film according to at least one of claims 1 to 7, wherein the cycloolefin polymer is dispersed in a matrix of the semi-crystalline alpha-olefin polymer.

9. Polyolefin film according to claim 8, wherein the cycloolefin polymer forms a co-continuous phase in the matrix of the semi-crystalline alpha-olefin polymer.

10. Polyolefin film according to at least one of claims 1 to 9, wherein its total content of iron, cobalt, nickel, titanium, molybdenum, vanadium, chromium, copper, and aluminum is less than 0.25 ppm.

11. Polyolefin film according to at least one of claims 1 to 10, wherein the film has a thickness of between 0.5 and 15 µm, measured according to DIN 53370, preferably between 1 and 10 µm.

12. Polyolefin film according to at least one of claims 1 to 11, wherein it has a dielectric breakdown strength of 500 to 750 V/µm according to DIN EN 60243-2, measured under direct voltage, and/or wherein it has a dielectric dissipation factor of less than or equal to 0.002, measured at a frequency in the range of 1 kHz to 1 GHz at a temperature of 25°C.

13. Polyolefin film according to at least one of claims 1 to 12, wherein it has a shrinkage at 130°C after 5 minutes in the machine direction, measured according to DIN ISO 11501, of less than or equal to 2% and a shrinkage at 130°C after 5 minutes transverse to the machine direction, measured according to DIN ISO 11501, of less than or equal to 0.5%.

14. Polyolefin film according to at least one of claims 1 to 13, wherein it is a multilayer film comprising at least one core layer containing
a) 10 to 45 wt% of a cycloolefin polymer having a glass transition temperature between 120 and 170°C, and
b) 90 to 55 wt% of a semi-crystalline alpha-olefin polymer having a crystallite melting temperature between 150 and 170°C,
wherein the glass transition temperature of component a) is less than or equal to the crystallite melting temperature of component b), and comprising one or two outer layers made of one or more semi-crystalline alpha-olefin polymers, wherein the multilayer films exhibit a shrinkage at 130°C after 5 minutes, measured according to DIN ISO 11501, of less than or equal to 2%,
or wherein it is a multilayer film comprising at least one core layer composed of two or more layers each containing
a) 10 to 45 wt% of a cycloolefin polymer having a glass transition temperature between 120 and 170°C, and
b) 90 to 55 wt% of a semi-crystalline alpha-olefin polymer having a crystallite melting temperature between 150 and 170°C,
wherein the glass transition temperature of component a) is less than or equal to the crystallite melting temperature of component b), and wherein the multilayer films exhibit a shrinkage at 130°C after 5 minutes, measured according to DIN ISO 11501, of less than or equal to 2%.

15. Process for producing the capacitor polyolefin film according to any one of claims 1 to 14, comprising the steps of:
i) ´ producing a film comprising 10 to 45 wt% of the cycloolefin polymer of component a) according to claim 1 and 90 to 55 wt% of the alpha-olefin polymer of component b) according to claim 1, and
ii) biaxially stretching the film from step i) by sequential stretching or by simultaneous stretching.

16. Capacitor comprising a capacitor polyolefin film according to any one of claims 1 to 14.

17. Use of a capacitor polyolefin film according to any one of claims 1 to 14 as a dielectric for the production of capacitors.

## Revendications

1. Film de polyoléfine pour condensateur à orientation biaxiale contenant:
a) 10 à 45 % en poids d'un polymère de cyclooléfine dont la température de transition vitreuse, déterminée par la méthode de mesure décrite, est comprise entre 120 et 170 °C, et
b) 90 à 55 % en poids d'un polymère d'alpha-oléfine semi-cristallin dont la température de fusion des cristallites, déterminée par la méthode de mesure décrite, est comprise entre 150 et 170 °C,
la température de transition vitreuse du composant a) étant inférieure ou égale à la température de fusion des cristallites du composant b), et le film de polyoléfine présente un retrait inférieur ou égal à 2 % à 130 °C après 5 minutes, mesuré selon la norme ISO 11501.

2. Film de polyoléfine selon la revendication 1, **caractérisé en ce qu'**il présente une rugosité de surface Rₐ, mesurée selon DIN EN ISO 4287, de 0,02 à 0,5 µm, de préférence de 0,04 à 0,2 µm.

3. Film de polyoléfine selon la revendication 2, **caractérisé en ce qu'**il présente une rugosité de surface R_{z}, mesurée selon la norme DIN EN ISO 4287, comprise entre 0,1 et 2 µm, et plus particulièrement entre 0,3 et 0,8 µm.

4. Film de polyoléfine selon la revendication 1, **caractérisé en ce que** le polymère de cyclooléfine est obtenu par copolymérisation avec conservation du cycle d'au moins une cyclooléfine avec au moins une α-oléfine, la cyclooléfine étant le norbornène ou le tétracyclododécène et l'α-oléfine étant l'éthylène et/ou le propylène, la copolymérisation de la cyclooléfine et de l'α-oléfine étant de préférence réalisée en présence d'un catalyseur métallocène.

5. Film de polyoléfine selon au moins une des revendications 1 à 4, **caractérisé en ce que** le polymère d'alpha-oléfine semi-cristallin est un homopolymère ou un copolymère d'alpha-oléfine semi-cristallin, de préférence un homopolymère de propylène ou un copolymère obtenu par copolymérisation de propylène avec une quantité inférieure ou égale à 5 % en poids d'une alpha-oléfine comportant deux ou quatre à huit atomes de carbone.

6. Film de polyoléfine selon au moins une des revendications 1 à 5, **caractérisé en ce que** la température de transition vitreuse du copolymère de cyclooléfine est comprise entre 130 et 170 °C, de préférence entre 140 et 160 °C.

7. Film de polyoléfine selon au moins une des revendications 1 à 6, **caractérisé en ce que** le copolymère de cyclooléfine a un indice de fluidité à l'état fondu compris entre 0,3 et 4 g/10 minutes, mesuré à une température de 230 °C sous une charge de 2,16 kg, et/ou que le polymère d'alpha-oléfine semi-cristallin a un indice de fluidité à l'état fondu compris entre 1 et 4 g/10 minutes, mesuré à une température de 230 °C sous une charge de 2,16 kg.

8. Film de polyoléfine selon au moins une des revendications 1 à 7, **caractérisé en ce que** le polymère cyclooléfine est dispersé dans une matrice de polymère alpha-oléfine semi-cristallin.

9. Film de polyoléfine selon la revendication 8, **caractérisé en ce que** le polymère cyclooléfine forme une phase co-continue dans la matrice du polymère alpha-oléfine semi-cristallin.

10. Film de polyoléfine selon au moins une des revendications 1 à 9, **caractérisé en ce que** sa teneur totale en fer, cobalt, nickel, titane, molybdène, vanadium, chrome, cuivre et aluminium est inférieure à 0,25 ppm.

11. Film de polyoléfine selon au moins une des revendications 1 à 10, **caractérisé en ce que** son épaisseur est comprise entre 0,5 et 15 µm, mesurée selon la norme DIN 53370, de préférence entre 1 et 10 µm.

12. Film de polyoléfine selon au moins une des revendications 1 à 11, **caractérisé en ce qu'**il présente une rigidité diélectrique de 500 à 750 V/µm selon la norme DIN EN 60243-2, mesurée sous tension continue, et/ou **en ce qu'**il présente un facteur de perte diélectrique inférieur ou égal à 0,002, mesuré à une fréquence comprise entre 1 kHz et 1 GHz à une température de 25 °C.

13. Film de polyoléfine selon au moins une des revendications 1 à 12, **caractérisé en ce qu'**il présente un retrait à 130 °C après 5 minutes dans le sens machine, mesuré selon la norme DIN ISO 11501, inférieur ou égal à 2 %, et un retrait à 130 °C après 5 minutes perpendiculairement au sens machine, mesuré selon la norme DIN ISO 11501, inférieur ou égal à 0,5 %.

14. Film de polyoléfine selon au moins une des revendications 1 à 13, **caractérisé en ce qu'**il s'agit d'un film multicouche comprenant au moins une couche centrale comprenant :
a) 10 à 45 % en poids d'un polymère de cyclooléfine avec une température de transition vitreuse comprise entre 120 et 170 °C, et
b) 90 à 55 % en poids d'un polymère d'alpha-oléfine semi-cristallin avec une température de fusion des cristallites comprise entre 150 et 170 °C,
la température de transition vitreuse du composant a) étant inférieure ou égale à la température de fusion des cristallites du composant b), et comprenant une ou deux couches de couverture d'un ou plusieurs polymères d'alpha-oléfine semi-cristallins, les films multicouches présentant un retrait à 130 °C après 5 minutes, mesuré selon la norme DIN ISO 11501, inférieur ou égal à 2 % ; ou
qu'il s'agit d'un film multicouche comprenant au moins une couche centrale constituée de deux couches ou plus, chacune comprenant:
a) 10 à 45 % en poids d'un polymère de cyclooléfine présentant une température de transition vitreuse comprise entre 120 et 170 °C, et
b) 90 à 55 % en poids d'un polymère d'alpha-oléfine semi-cristallin présentant une température de fusion des cristallites comprise entre 150 et 170 °C,
la température de transition vitreuse du composant a) étant inférieure ou égale à la température de fusion des cristallites du composant b), les films multicouches présentant un retrait à 130 °C après 5 minutes, mesuré selon la norme DIN ISO 11501, inférieur ou égal à 2 %.

15. Procédé de fabrication d'un film polyoléfine pour condensateur selon l'une quelconque des revendications 1 à 14, comprenant les étapes suivantes:
i) fabrication d'un film contenant de 10 à 45 % en poids du polymère cyclooléfine du composant a) selon la revendication 1 et de 90 à 55 % en poids du polymère alpha-oléfine du composant b) selon la revendication 1, et
ii) étirage biaxial du film obtenu à l'étape i) par étirage séquentiel ou simultané.

16. Condensateur comprenant un film polyoléfine pour condensateur selon l'une quelconque des revendications 1 à 14.

17. Utilisation d'un film polyoléfine pour condensateur selon l'une quelconque des revendications 1 à 14 comme diélectrique pour la fabrication de condensateurs.
